# EUROPÄISCHE PATENTSCHRIFT

(11) **EP 3 721 371 B1**
(45) Veröffentlichungstag und Bekanntmachung des Hinweises auf die Patenterteilung: **24.07.2024**
(21) Anmeldenummer: 18789108.0
(22) Anmeldetag: 16.10.2018
(51) Int. Cl.: G01C 21/36, G06V 10/75, G06V 20/56

(54) **VERFAHREN ZUR POSITIONSBESTIMMUNG FÜR EIN FAHRZEUG, STEUERGERÄT UND FAHRZEUG**
METHOD FOR POSITION DETERMINATION FOR A VEHICLE, CONTROLLER AND VEHICLE
PROCÉDÉ DE DÉTERMINATION DE LA POSITION D'UN VÉHICULE, APPAREIL DE COMMANDE ET VÉHICULE

(30) Priorität: 04.12.2017 DE 102017221839
(43) Veröffentlichungstag der Anmeldung: 14.10.2020
(73) Patentinhaber: Robert Bosch GmbH, 70442 Stuttgart (DE)
(72) Erfinder: NIEM, Wolfgang, 31141 Hildesheim (DE); HOMANN, Hanno, 30629 Hannover (DE); WOLTER, Jan, 30173 Hannover (DE)
(86) Internationale Anmeldenummer: PCT/EP2018/078267
(87) Internationale Veröffentlichungsnummer: WO 2019/110179

(56) Entgegenhaltungen:
- DE-A1- 102012 013 492
- US-A1- 2015 227 775
- SONG GAO: "Accurate vehicle self-localization in high definition map dataset", PROCEEDINGS OF THE 1ST ACM SIGSPATIAL WORKSHOP ON HIGH-PRECISION MAPS AND INTELLIGENT APPLICATIONS FOR AUTONOMOUS VEHICLES, 7 November 2017 (2017-11-07), New York, NY, USA, pages 1 - 8, XP093155982, ISBN: 978-1-4503-5497-4, Retrieved from the Internet <URL:https://dl.acm.org/doi/pdf/10.1145/3149092.3149094>
- "Serious Games", vol. 6469, 1 January 2011, SPRINGER INTERNATIONAL PUBLISHING, Cham, ISBN: 978-3-642-15171-2, ISSN: 0302-9743, article MASAFUMI NODA ET AL: "Vehicle Ego-Localization by Matching In-Vehicle Camera Images to an Aerial Image", pages: 163 - 173, XP055541572, DOI: 10.1007/978-3-642-22819-3_17
- GIANPAOLO CONTE ET AL: "An Integrated UAV Navigation System Based on Aerial Image Matching", PROCEEDINGS OF THE 2008 IEEE AEROSPACE CONFERENCE, 1 March 2008 (2008-03-01), XP055541531, Retrieved from the Internet <URL:https://www.ida.liu.se/divisions/aiics/publications/AEROCONF-2008-Integrated-UAV-Navigation.pdf> DOI: 10.1109/AERO.2008.4526556

## Beschreibung

### Stand der Technik

Die vorliegende Erfindung betrifft ein Verfahren zur Positionsbestimmung für ein Fahrzeug, ein Steuergerät zur Durchführung des Verfahrens und ein Fahrzeug mit einem solchen Steuergerät.

Die Schriften US 2008/205706 A1 und US 2011/001826 A1 beschreiben eine Ermittlung eines transformierten Bildes in Abhängigkeit eines mittels einer Kamera erfassten Kamerabildes, wobei die Kamera an einem Fahrzeug angeordnet ist. Das transformierte Bild weist gegenüber dem erfassten Kamerabild eine veränderte Perspektive, insbesondere eine Vogelperspektive beziehungsweise eine virtuelle Perspektive von einem über dem Fahrzeug angeordneten Beobachtungsstandpunkt mit einer Blickrichtung von oben nach unten auf das Fahrzeug beziehungsweise die Fahrbahn auf.

Aus der Schrift DE 103 51 778 A1 ist eine pixelweise Berechnung von Signaturstrings beziehungsweise eines Merkmals bekannt, wobei der einem Pixel zugeordnete Signaturstring jeweils eine Umgebung des Pixels beschreibt.

In der Bildverarbeitung ist ferner die Ermittlung von Objekten und/oder Segmenten in einem Bild bekannt (siehe beispielsweise Nida M. Zaitoun & Musbah J. Aqel (2015) Survey on Image Segmentation Techniques In: Procedia Computer Science 65, S.797-806 oder J. Redmon & A. Farhadi (2016) YOLO9000: Better, Faster, Stronger In: arXiv:1612.08242v1 [cs.CV])).

In dem Dokument DE 10 2016 200 656 A1 ist ein Verfahren zum Auswerten eines Umfeldes eines Fahrzeuges offenbart, wobei eine Distanzmessung mittels eines ersten aktiven Sensors erfolgt. Der aktive Sensor ist beispielsweise ein Ultraschallsensor, ein Radarsensor oder ein LIDAR-Sensor. Durch das Verfahren wird beispielsweise ein Abstand zwischen einem Fahrzeug und einem ersten Umgebungsobjekt ermittelt.

Ein weiteres relevantes Dokument ist: Noda, M. et al. (2011). Vehicle Ego-Localization by Matching In-Vehicle Camera Images to an Aerial Image. In: Koch, R., Huang, F. (eds) Computer Vision - ACCV 2010 Workshops. ACCV 2010. Lecture Notes in Computer Science, vol 6469. Springer, Berlin, Heidelberg. https://doi.org/10.1007/978-3-642-22819-3_17.

Die Ermittlung einer aktuellen Fahrspur auf einer mehrspurigen Straße kann durch eine satellitengestützte Positionsbestimmung wegen der unzureichenden Genauigkeit von 1 - 10m der satellitengestützten Positionsbestimmung nicht zuverlässig erzielt werden.

### Offenbarung der Erfindung

Die vorliegende Erfindung betrifft ein Verfahren zur Positionsbestimmung eines Fahrzeugs. Am Fahrzeug sind mindestens eine Kamera und eine Sensoreinheit für ein globales Satellitennavigationssystem angeordnet. Das Verfahren weist eine Erfassung wenigstens eines Kamerabildes der Umgebung des Fahrzeugs mittels der Kamera auf. Anschließend erfolgt eine Erzeugung eines transformierten Bildes in Abhängigkeit zumindest eines Ausschnitts des erfassten Kamerabildes, wobei der Ausschnitt des erfassten Kamerabildes insbesondere eine beliebige Form aufweisen und/oder mehrere nicht zusammengehörige Bereiche des Kamerabildes umfassen kann. Beispielsweise wird das transformierte Bild in Abhängigkeit erkannter objektfreier Flächen im Kamerabild als Ausschnitt des Kamerabildes, insbesondere von erkannten horizontalen Straßenflächen, erzeugt. Das transformierte Bild wird in Abhängigkeit eines digitalen Geländemodells erzeugt, wobei das Geländemodell in Abhängigkeit einer erfassten Satellitenposition des Fahrzeugs geladen wird. Das transformierte Bild stellt eine Ansicht von einem virtuellen Beobachterstandpunkt mit einer nach unten gerichteten Perspektive auf einen Untergrund einer Fahrtstrecke des Fahrzeugs dar bzw. weist eine, insbesondere senkrecht, nach unten gerichtete virtuelle Perspektive auf. Mit anderen Worten wird bei der Erzeugung des transformierten Bildes in Abhängigkeit des erfassten Kamerabildes die Beobachterperspektive der Kamera beziehungsweise des Kamerabildes zu einer virtuellen Perspektive rechnerisch verändert, d.h. die Darstellung des Bildinhalts des transformierten Bildes gegenüber dem erfassten Kamerabild verändert beziehungsweise verzerrt. Der virtuelle Beobachtungsstandpunkt liegt dabei insbesondere oberhalb des Fahrzeugs und die virtuelle Perspektive ist nach unten auf die Umgebung des Fahrzeugs gerichtet. Die Erzeugung des transformierten Bildes erfolgt in Abhängigkeit mindestens eines Teils des erfassten Kamerabildes und einer Transformationsmatrix, das heißt einer Zuordnung zwischen den Pixeln des transformierten Bildes zu den Pixeln des erfassten Kamerabildes. In einem weiteren Verfahrensschritt wird eine Satellitenposition des Fahrzeugs durch eine satellitengestützte Positionsbestimmung bestimmt. Danach erfolgt eine Bereitstellung eines Luftbildes der Umgebung des Fahrzeugs in Abhängigkeit der bestimmten Satellitenposition. Anschließend wird eine Lage zumindest eines Teils des transformierten Bildes in dem bereitgestellten Luftbild erkannt. Die Erkennung der Lage erfolgt beispielsweise in Abhängigkeit der Bildinformationen der Pixel. In Abhängigkeit der erkannten Lage des transformierten Bildes in dem bereitgestellten Luftbild wird danach eine Fahrzeugposition ermittelt. Da durch den festen Anbauort der Kamera an dem Fahrzeug der örtliche Bezug zwischen dem Fahrzeug und dem Kamerabild bekannt ist, wird vorteilhafterweise durch das Verfahren im Vergleich zur satellitengestützten Positionsbestimmung eine genauere Fahrzeugposition bestimmt. Beispielsweise wird vorteilhafterweise mit dem erfindungsgemäßen Verfahren die aktuelle Fahrspur auf einer mehrspurigen Straße in Abhängigkeit der bestimmten Fahrzeugposition ermittelt. Das Verfahren kann vorteilhafterweise durchgeführt werden, wenn sich das Fahrzeug in der Nähe von Gefahrenstellen befindet, beispielsweise einem in dem Kamerabild erkannten Stauende, beziehungsweise das Fahrzeug eine Satellitenposition aufweist, welche einer Gefahrenstelle zugeordnet ist, beispielsweise an Kreuzungen, Auf- und Abfahrten von Autobahnen, Schlaglöchern im Fahrbahnbelag, Schulen und/oder Zebrastreifen. Gefahrenstellen können zur Verbesserung des Verfahrens strukturelle Markierungen und/oder farbliche Markierungen aufweisen, wodurch die Lage zumindest eines Teils des transformierten Bildes in dem bereitgestellten Luftbild zuverlässig erkannt wird, da diese Markierungen eindeutig im dem Kamerabild beziehungsweise dem transformierten Bild sowie dem Luftbild erkannt werden.

In einer Ausgestaltung der Erfindung wird eine Anpassung des transformierten Bildes und/oder des Luftbildes durchgeführt. Die Anpassung erfolgt beispielsweise durch eine Umwandlung des transformierten Bildes und des Luftbildes in ein Graustufenbild und/oder eine Anpassung einer Helligkeit des Luftbildes an das transformierte Bild. Durch diese Anpassungen wird die Lage des transformierten Bildes in dem bereitgestellten Luftbild zuverlässiger erkannt, da der Einfluss beispielsweise unterschiedlicher Tageszeiten oder Lichtverhältnisse reduziert wird. Vorteilhafterweise werden durch die Anpassung das transformierte Bild und/oder das bereitgestellte Luftbild skaliert, wobei die Skalierung beispielsweise in Abhängigkeit von erkannten Objekten und/oder Segmenten erfolgen kann, siehe dazu auch folgende Ausführungen.

Die Erzeugung des transformierten Bildes wird in Abhängigkeit eines digitalen Geländemodells der Umgebung durchgeführt, wobei das Geländemodell in Abhängigkeit der bestimmten Satellitenposition geladen wird. In dieser Ausführung wird beispielsweise der Vorteil erreicht, dass in dem transformierten Bild lediglich nahezu horizontale Bereiche der Umgebung abgebildet sind, welche in dem Luftbild gut erkannt werden können, das heißt in dieser Ausführung wird die Lage zumindest eines Teils des transformierten Bildes in dem bereitgestellten Luftbild zuverlässiger erkannt und/oder die Rechenleistung zur Lageerkennung reduziert.

In einer bevorzugten Ausgestaltung ist eine pixelweise Ermittlung einer Umgebungsgröße als Merkmal des jeweiligen Pixels in dem transformierten Bild und dem bereitgestellten Luftbild vorgesehen. Bei der Ermittlung der Umgebungsgröße eines Pixels beziehungsweise des Merkmals des Pixels wird für jeden Pixel des transformierten Bildes und des bereitgestellten Luftbildes beispielsweise ein Zahlenwert berechnet, welcher die jeweilige Umgebung des Pixels beziehungsweise die Bildinformationen der benachbarten Pixel beschreibt. Vorteilhafterweise wird beispielsweise eine pixelweise Berechnung von Signaturstrings gemäß der Schrift DE 103 51 778 A1 durchgeführt. Die Erkennung der Lage des transformierten Bildes in dem Luftbild erfolgt in dieser Ausgestaltung in Abhängigkeit einer Zuordnung von mindestens zwei in dem transformierten Bild ermittelten Merkmalen beziehungsweise Umgebungsgrößen zu in dem Luftbild ermittelten Umgebungsgrößen. Diese Zuordnung kann durch eine Korrespondenzanalyse erfolgen, wobei die Korrespondenzanalyse beispielsweise aus einer Berechnung des optischen Flusses oder einer stereoskopischen Auswertung zwischen zwei Bildern bekannt ist. Die Erkennung der Lage in Abhängigkeit von ermittelten Merkmalen beziehungsweise Umgebungsgrößen, welche die jeweilige Umgebung eines Pixels beschreiben, ist vorteilhafterweise schnell und genau.

In einer weiteren Ausgestaltung kann eine Ermittlung von ersten Segmenten in dem transformierten Bild und eine Ermittlung von zweiten Segmenten in dem bereitgestellten Luftbild durch ein Segmentierungsverfahren durchgeführt werden. Segmentierungsverfahren unterteilen ein Bild typischerweise in Regionen mit ähnlichen Bild-Charakteristiken, beispielsweise weist ein Bild in einem ermittelten Segment einen ähnlichen Farbwert und/oder eine ähnliche Oberflächentextur auf.

Beispielsweise wird eine Straßenoberfläche oder ein Haus oder ein Zaun in der Umgebung des Fahrzeugs in Abhängigkeit des Farbwertes als erstes Segment in dem transformierten Bild und/oder als zweites Segment in dem Luftbild jeweils mit einer charakteristischen Segmentform, beispielsweise einer Straßenform, ermittelt. Die Erkennung der Lage des transformierten Bildes in dem Luftbild erfolgt in dieser Ausgestaltung in Abhängigkeit einer Zuordnung des mindestens einen ersten Segments zu einem zweiten Segment. Beispielsweise wird vorteilhafterweise ein erstes Segment einem zweiten Segment in Abhängigkeit der Farbwerte in den Segmenten und/oder der Oberflächentexturen der Segmente zugeordnet. Anschließend wird vorteilhafterweise die Lage des transformierten Bildes in dem Luftbild in Abhängigkeit einer ersten Form des ersten Segmentes und einer zweiten Form des zweiten Segmentes erkannt. Die Lageerkennung in Abhängigkeit ermittelter erster und zweiter Segmente, insbesondere in Abhängigkeit einer Form der jeweiligen Segmente, ist vorteilhafterweise sehr genau.

Des Weiteren erfolgt eine Ermittlung von ersten feststehenden Objekten in dem erfassten Kamerabild oder in dem transformierten Bild und eine Ermittlung von zweiten feststehenden Objekten in dem bereitgestellten Luftbild durch jeweils eine Objekterkennung. Feststehende Objekte sind beispielsweise Gebäude, Teile der Straßeninfrastruktur, insbesondere Ampeln, Bushaltestellen und Verkehrszeichen, und/oder Bäume beziehungsweise Pflanzen. Anschließend wird die Erkennung der Lage des transformierten Bildes in dem Luftbild in Abhängigkeit einer Zuordnung des mindestens einen ersten Objektes zu einem zweiten Objekt durchgeführt. Erkannte feststehende Objekte weisen einen festen Abstand voneinander auf, so dass die erkannte Lage des transformierten Bildes in dem Luftbild in Abhängigkeit einer Zuordnung des mindestens einen ersten Objektes zu einem zweiten Objekt vorteilhafterweise sehr genau ist.

In einer Weiterführung des Verfahrens wird eine Tiefenkarte der Umgebung des Fahrzeugs mittels Abstandssensoren erfasst. Die Abstandssensoren sind dazu eingerichtet, einen Abstand zwischen dem Fahrzeug und Objekten in der Umgebung zu erfassen. Die Abstandssensoren sind vorteilhafterweise Ultraschallsensoren, LIDAR-Sensoren und/oder Radar-Sensoren. Anschließend erfolgt eine Ermittlung von Konturen und/oder Objekten in der Umgebung des Fahrzeugs in Abhängigkeit der erfassten Tiefenkarte. Die Erkennung der Lage des transformierten Bildes in dem Luftbild wird in dieser Weiterführung zusätzlich in Abhängigkeit einer Zuordnung der ermittelten Konturen in der Tiefenkarte und/oder eines in der Tiefenkarte ermittelten Objektes zu mindestens einem ermittelten zweiten Objekt und/oder einem ermittelten zweiten Segment in dem Luftbild durchgeführt. Dadurch entsteht der Vorteil, dass beispielsweise ein Abstand zu einem Gebäude oder einer Leitplanke einer Autobahn erfasst und die Erkennung der Lage des transformierten Bildes in dem Luftbild beziehungsweise die Ermittlung der Fahrzeugposition in Abhängigkeit des erfassten Abstandes zu dem Gebäude oder der Leitplanke ermittelt wird. Die ermittelte Fahrzeugposition ist in dieser Weiterführung sehr genau.

Die Erfindung betrifft auch ein Steuergerät. Das Steuergerät ist dazu eingerichtet, das Verfahren zur Positionsbestimmung des Fahrzeugs durchzuführen. Zu diesem Zweck erfasst das Steuergerät mittels der mindestens einen Kamera das wenigstens eine Kamerabild der Umgebung des Fahrzeugs. Das Steuergerät erzeugt ferner das transformierte Bild in Abhängigkeit wenigstens eines Teils des mindestens einen erfassten Kamerabildes mittels einer Recheneinheit. Das transformierte Bild wird mittels der Recheneinheit in Abhängigkeit einer Transformationsmatrix, welche insbesondere durch eine vorher durchgeführte Kalibrierung bestimmt wird, und des erfassten Kamerabildes berechnet. Die Berechnung des transformierten Bildes erfolgt insbesondere durch eine Umordnung der Pixel des erfassten Kamerabildes und eine Skalierung des erfassten Kamerabildes, so dass das transformierte Bild gegenüber dem Kamerabild einen veränderte Ansicht beziehungsweise eine geänderte Perspektive, insbesondere von einem anderen Beobachtungsstandpunkt und unter einem anderen Blickwinkel aufweist. Das Steuergerät bestimmt außerdem mittels der Sensoreinheit die Satellitenposition des Fahrzeugs durch eine satellitengestützte Positionsbestimmung und stellt mittels eines elektronischen Speichers ein Luftbild der Umgebung des Fahrzeugs in Abhängigkeit der erfassten Satellitenposition bereit. Die in dem elektronischen Speicher gespeicherten Luftbilder werden vorteilhafterweise in regelmäßigen zeitlichen Abständen aktualisiert. Anschließend ermittelt das Steuergerät mittels der Recheneinheit die Fahrzeugposition, insbesondere die Fahrzeugkoordinaten, in Abhängigkeit der erkannten Lage des transformierten Bildes in dem bereitgestellten Luftbild.

Das Steuergerät kann in einer optionalen Ausgestaltung das Kamerabild mittels einer Infrarot-Kamera als Kamera erfassen. In dieser Ausgestaltung entsteht der Vorteil, dass viele ortsfeste Objekte, wie Gebäude oder Bäume auch bei schlechten Wetterbedingungen, beispielsweise bei Nacht oder bei Regen, gut erkannt werden können.

In einer bevorzugten Ausgestaltung erzeugt das Steuergerät ein Ausgangssignal, wobei das Ausgangssignal dazu eingerichtet ist, die ermittelte Fahrzeugposition anzuzeigen und/oder die ermittelte Fahrzeugposition einer Fahrzeugsteuerung bereitzustellen. Dadurch entsteht der Vorteil, dass die genauer ermittelte Fahrzeugposition vorteilhafterweise weiterverarbeitet wird, wodurch beispielsweise die Fahrzeugsteuerung genauer und zuverlässiger, das heißt für einen Fahrer des Fahrzeugs sicherer, wird.

Es kann vorgesehen sein, dass das Steuergerät eine Tiefenkarte der Umgebung des Fahrzeugs mittels Abstandssensoren erfasst, wobei die Abstandssensoren beispielsweise Ultraschallsensoren, LIDAR-Sensoren und/oder Radar-Sensoren sind. Die Recheneinheit des Steuergeräts ermittelt in dieser Ausgestaltung Konturen und/oder Objekte in der Umgebung des Fahrzeugs in Abhängigkeit der erfassten Tiefenkarte. Das Steuergerät ermittelt vorteilhafterweise die Fahrzeugposition zusätzlich in Abhängigkeit einer Zuordnung der ermittelten Konturen in der Tiefenkarte und/oder eines in der Tiefenkarte ermittelten Objektes zu mindestens einem zweiten Objekt und/oder einem zweiten Segment in dem Luftbild.

Die Erfindung betrifft auch ein Fahrzeug mit einem erfindungsgemäßen Steuergerät.

Weitere Vorteile ergeben sich aus der nachfolgenden Beschreibung von Ausführungsbeispielen mit Bezug zu den Figuren.
Figur 1: seitliche Ansicht eines Fahrzeugs
Figur 2: Fahrzeug mit vier Kameras und Ultraschallsensoren
Figur 3: Verfahrensablauf zur Positionsbestimmung als Blockschaltbild
Figur 4: Steuergerät
Figur 5: Kalibrierung einer Kamera zur Ermittlung der Transformationsmatrix
Figur 6: In Abhängigkeit eines erfassten Kamerabildes erzeugtes transformiertes Bild
Figur 7: Transformiertes Bild mit ermitteltem Segment
Figur 8: Luftbild beziehungsweise Satellitenaufnahme einer Umgebung des Fahrzeugs
Figur 9: Erkannte Lage eines transformierten Bildes in einem Luftbild
Figur 10: Ermittelte Fahrzeugposition

### Ausführungsbeispiele

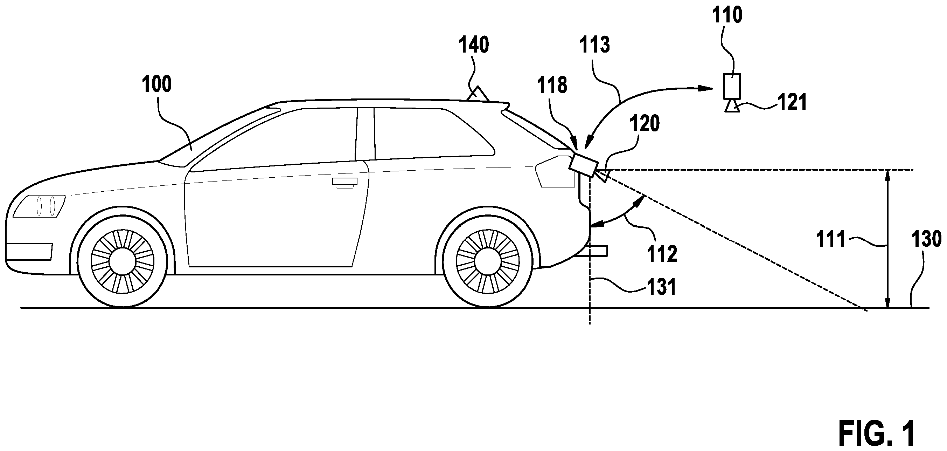

In Figur 1 ist eine seitliche Ansicht eines Fahrzeugs 100 auf einen Untergrund einer Fahrtstrecke 130 dargestellt. Eine am Fahrzeug 100 ortsfest angeordnete Kamera 110 blickt aus einer Perspektive 120 nach hinten in die Umgebung des Fahrzeugs 100 bzw. auf den Untergrund der Fahrtstrecke 130. Alternativ könnte die Kamera 110 auch nach vorne oder zur Seite gerichtet sein. Es können auch mehrere Kameras 110 am Fahrzeug angeordnet sein. Die in Figur 1 dargestellte Kamera 110 ist in einer Höhe 111 über dem Untergrund der Fahrtstrecke 130 am Fahrzeug 100 angeordnet und weist einen Blickwinkel 112 gegenüber der Vertikalen 131 auf. Der Blickwinkel 112 der Kamera 110 gegenüber der Vertikalen 131 ist bevorzugt zwischen 30 - 110°. Die Kamera 110 an dem Fahrzeug 100 weist beispielsweise ein Weitwinkel-Objektiv auf, so dass die Kamera 110 aus der Perspektive 120 einen großen Teil der hinter dem Fahrzeug 100 liegenden Umgebung des Fahrzeugs 100 erfasst. In Abhängigkeit des mittels der Kamera 110 aufgenommen Kamerabildes wird durch eine rechnerische Transformation 113 ein transformiertes Bild aus einer virtuellen Perspektive 121 mittels eines Steuergeräts 400 erzeugt beziehungsweise ermittelt. Die Ermittlung des transformierten Bildes durch die rechnerische Transformation erfolgt beispielsweise durch eine Transformationsmatrix, insbesondere durch eine Umordnung beziehungsweise Verzerrung der Pixel des erfassten Kamerabildes und eine Skalierung des erfassten Kamerabildes, so dass das transformierte Bild gegenüber dem Kamerabild einen veränderte Ansicht beziehungsweise eine geänderte Perspektive 121, insbesondere von einem anderen Beobachtungsstandpunkt und unter einem anderen Blickwinkel aufweist. Die gegenüber dem erfassten Kamerabild veränderte und ermittelte virtuelle Perspektive 121 ist bevorzugt eine Perspektive von einem oberhalb des Fahrzeugs liegenden Beobachtungsstandpunkt und mit einer Blickrichtung senkrecht nach unten auf den Untergrund der Fahrtstrecke 130. Das Fahrzeug 100 weist des Weiteren eine Sensoreinheit 140 für ein globales Satellitennavigationssystem auf.

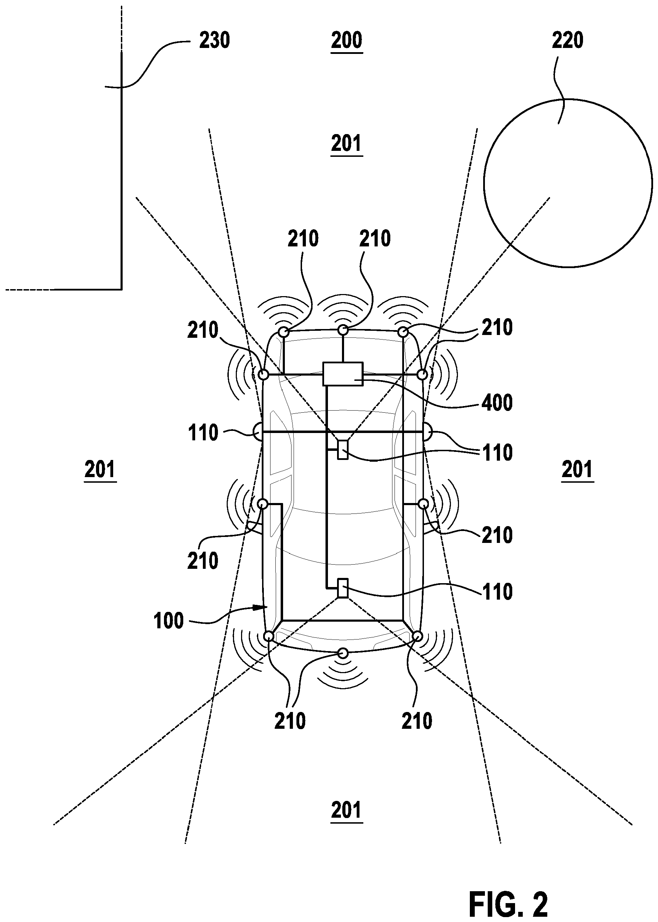

In Figur 2 ist ein Fahrzeug 100 mit vier Kameras 110 dargestellt, wobei jeweils eine Kamera 110 in Fahrtrichtung nach vorne, hinten, links oder rechts gerichtet angeordnet ist. Die von den Kameras 110 erfassten Kamerabilder erfassen die Bereiche 201 der Umgebung 200. Demnach kann die Umgebung 200 des Fahrzeugs 100 aus den Perspektiven 120 der Kameras 110 nahezu vollständig erfasst werden. Des Weiteren sind an dem Fahrzeug in Figur 2 mehrere Ultraschallsensoren bzw. Abstandssensoren 210 angeordnet. Die Abstandssensoren 210 sind dazu eingerichtet, einen Abstand zwischen dem Fahrzeug 100 und in der näheren Umgebung des Fahrzeugs 100 befindlichen Objekten zu erfassen. Die Kameras 110 und die Ultraschallsensoren 210 sind mittels Datenleitungen mit dem Steuergerät 400 des Fahrzeugs 100 verbunden. Mittels des Steuergeräts 400 wird ein Verfahren zur Positionsbestimmung für ein Fahrzeug durchgeführt. Das Steuergerät 400 erzeugt zu diesem Zweck das transformierte Bild in Abhängigkeit der erfassten Kamerabilder der Kameras 110. Optional erzeugt beziehungsweise ermittelt das Steuergerät 400 eine Tiefenkarte der Umgebung 200 des Fahrzeugs 100 in Abhängigkeit der erfassten Daten der Ultraschallsensoren 210. In dieser Tiefenkarte können Kontouren bzw. Umrisse von Objekten 220 und 230 erkannt werden. Diese Objekte sind beispielsweise Objekte der Verkehrsinfrastruktur, wie Bordsteinkanten und/oder Ampeln, und/oder ortsfeste Objekte in der Umgebung der Straße beziehungsweise des Fahrzeugs 100. Demnach werden beispielsweise ein Baum 220 und/oder ein Haus 230 in den erfassten Bereichen 201 optisch mittels der Kameras 110 und optional zusätzlich mittels der Abstandssensoren 210 erfasst. Die Zuverlässigkeit einer Objekterkennung in Abhängigkeit der Kamerabilder beziehungsweise des transformierten Bildes und/oder einer Objekterkennung in Abhängigkeit der erfassten Abstände beziehungsweise der Tiefenkarte ist jeweils abhängig von der Tageszeit bzw. der Helligkeit und den Wetterbedingungen.

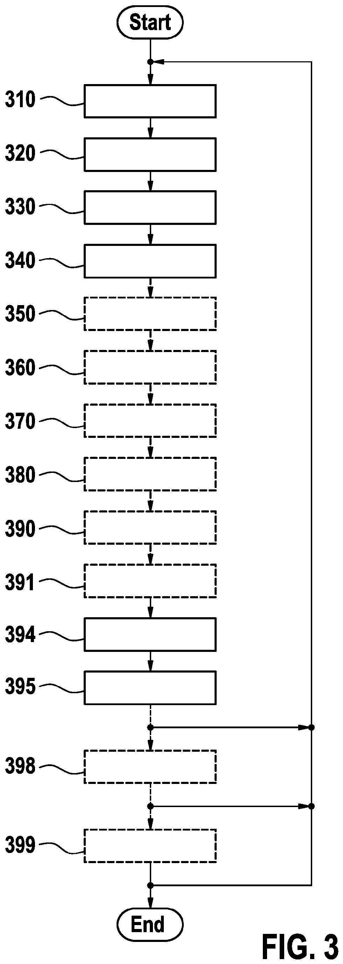

In Figur 3 ist ein Ablauf des Verfahrens zur Positionsbestimmung dargestellt. Zunächst erfolgt eine Erfassung 310 wenigstens eines Kamerabildes 600 der Umgebung 200 des Fahrzeugs 100 mittels der mindestens einen Kamera 110. Bevorzugt wird die Umgebung 200 des Fahrzeugs 100 mittels mehrerer Kameras 110, welche am Fahrzeug 100 angeordnet sind, nahezu vollständig erfasst. Anschließend wird im Schritt 320 ein transformiertes Bild 700 in Abhängigkeit des wenigstens eines Ausschnittes mindestens eines erfassten Kamerabildes 600 erzeugt. Das transformierte Bild 700 ist bevorzugt eine Ansicht von einem oberhalb des Fahrzeugs gelegenen Beobachtungspunkt mit einer senkrecht nach unten gerichteten, virtuellen Perspektive 121 auf den Untergrund der Fahrtstrecke 130. Die Perspektive 121 kann alternativ auch leicht schräg nach unten auf den Untergrund der Fahrtstrecke 130 gerichtet sein. Das transformierte Bild 700 wird vorteilhafterweise durch eine rechnerische Transformation 113 des erfassten Kamerabildes erzeugt. Die Transformation 113 erfolgt bevorzugt pixelweise durch eine Koordinatentransformation gemäß einer Look-Up-Tabelle bzw. Matrix, da eine Anbauhöhe und eine Perspektive 120 beziehungsweise ein Blickwinkel der Kamera 110 bekannt sind. Danach erfolgt eine Bestimmung 330 einer Satellitenposition des Fahrzeugs 100. Die Satellitenposition des Fahrzeugs 100 wird durch eine satellitengestützte Positionsbestimmung mittels der Sensoreinheit 140 für ein globales Satellitennavigationssystem durchgeführt, beispielsweise durch das GPS-Verfahren. Anschließend wird in einem Schritt 340 ein Luftbild 800 der Umgebung des Fahrzeugs 100 in Abhängigkeit der bestimmten Satellitenposition aus einem elektronischen Speicher bereitgestellt. Optional werden danach im Schritt 350 das transformierte Bild 700 und/oder das Luftbild 800 aneinander angepasst. Die Anpassung 350 erfolgt beispielsweise durch eine Umwandung des transformierten Bildes 700 und/oder des Luftbildes 800 in ein Graustufenbild und/oder eine Anpassung der Helligkeit des Luftbildes 800 an das transformierte Bild 700. Es kann zusätzlich eine Skalierung des transformierten Bildes 700 und/oder des Luftbildes 800 vorgesehen sein. Anschließend kann optional eine Ermittlung 360 von einer Umgebungsgröße eines Pixels beziehungsweise eines Pixelmerkmals in dem transformierten Bild 700 und dem bereitgestellten Luftbild 800 durchgeführt werden. Die Ermittlung 360 des Pixelmerkmals erfolgt beispielsweise für jedes Pixel separat. Jedem Pixel des transformierten Bildes 700 und des bereitgestellten Luftbildes 800 wird demnach ein Merkmal zugeordnet, wobei das Merkmal die jeweilige Umgebung des Pixels, beispielsweise als Signaturstring gemäß der Schrift DE 103 51 778 A1, beschreibt. Optional kann eine Ermittlung 370 von ersten Segmenten in dem transformierten Bild 700 und von zweiten Segmenten in dem bereitgestellten Luftbild 800 durch ein Segmentierungsverfahren erfolgen. Des Weiteren wird optional eine Ermittlung 380 von ersten Objekten in dem erfassten Kamerabild 600 oder in dem transformierten Bild 700 und von zweiten Objekten in dem bereitgestellten Luftbild 800 durch eine Objekterkennung durchgeführt. Verfahren zur Segmentierung- und/oder Objekterkennung, beispielsweise mittels neuronalen Netzwerken, sind aus der Bildverarbeitung bekannt. Des Weiteren kann optional die Tiefenkarte der Umgebung des Fahrzeugs 100 erzeugt werden. Die optionale Erfassung 390 der Tiefenkarte erfolgt mittels Abstandssensoren, insbesondere Ultraschallsensoren, welche dazu eingerichtet sind, einen Abstand zwischen dem Fahrzeug und Objekten in der Umgebung zu erfassen. In Abhängigkeit der Tiefenkarte können in einem Schritt 391 Konturen und/oder Objekte sowie deren Lage in der Umgebung des Fahrzeugs ermittelt werden. Die erzeugte Tiefenkarte kann zweidimensional oder dreidimensional sein. Erfindungsgemäß wird anschließend eine Erkennung 394 der Lage des transformierten Bildes 700 in dem bereitgestellten Luftbild 800 durchgeführt. Diese Erkennung 394 der Lage des transformierten Bildes 700 erfolgt beispielsweise in Abhängigkeit einer Zuordnung bzw. einer Korrespondenzbildung von mindestens zwei in dem transformierten Bild 700 ermittelten Pixelmerkmalen zu in dem Luftbild 800 ermittelten Pixelmerkmalen. Die Erkennung 394 der Lage des transformierten Bildes 700 in dem Luftbild 800 kann alternativ oder zusätzlich in Abhängigkeit einer Zuordnung des mindestens einen ersten Segments zu einem zweiten Segment und/oder einer Zuordnung des mindestens einen ersten Objektes zu einem zweiten Objekt erfolgen. Des Weiteren kann die Erkennung 394 der Lage alternativ oder zusätzlich durch eine Zuordnung der ermittelten Konturen in der Tiefenkarte und/oder eines in der Tiefenkarte ermittelten Objektes zu mindestens einem zweiten Objekt und/oder einem zweiten Segment in dem Luftbild 800 erfolgen. Anschließend erfolgt die Ermittlung 395 der Fahrzeugposition 1000 beziehungsweise der Fahrzeugkoordinaten 1000 in Abhängigkeit der erkannten Lage des transformierten Bildes 700 in dem Luftbild 800. Das Verfahren wird bevorzugt kontinuierlich durchgeführt, das heißt die Fahrzeugkoordinaten 1000 werden kontinuierlich aktualisiert. Optional kann zusätzlich eine Ausrichtung 398 des Fahrzeugs 100 in Abhängigkeit der erkannten Lage des transformierten Bildes 700 in dem bereitgestellten Luftbild 800 ermittelt werden. Des Weiteren kann optional im Schritt 399 die ermittelte Fahrzeugposition 1000 und/oder die ermittelte Ausrichtung des Fahrzeugs 100 angezeigt und/oder einer Fahrzeugsteuerung zu einer zumindest teilweise automatischen Steuerung des Fahrzeugs 100 bereitgestellt werden.

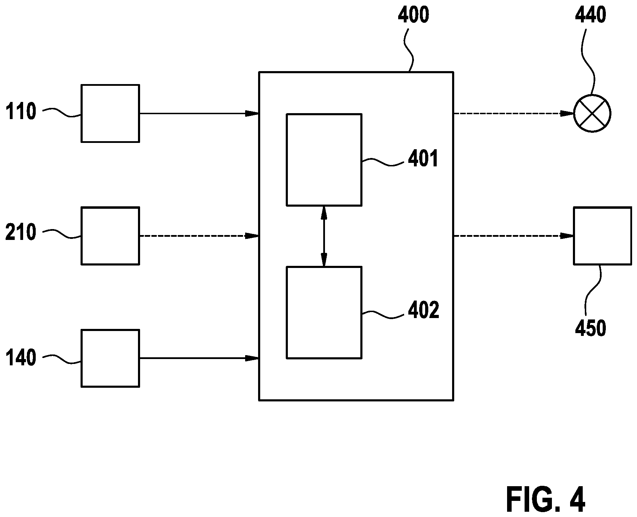

In Figur 4 ist das Steuergerät 400 zur Durchführung des Verfahrens zur Positionsbestimmung dargestellt. Das Steuergerät 400 empfängt beziehungsweise erfasst wenigstens ein Kamerabild 600 der Umgebung 200 der Fahrzeugs 100 mittels der mindestens einen Kamera 110 und bevorzugt mittels eines Datenkabels. Mittels einer Recheneinheit 401 wird anschließend das erfasste Kamerabild 600 in ein Bild 700 transformiert, wobei das transformierte Bild 700 vorteilhafterweise eine Ansicht einer virtuellen Kamera aus einer im Wesentlichen senkrecht nach unten gerichteten, virtuellen Perspektive 121 von einem gegenüber der Fahrbahn beziehungsweise einen Untergrund einer Fahrtstrecke 130 erhöhten Beobachterstandpunkt ist. Es kann vorgesehen sein, dass nur ein Teilbereich oder Teilbereiche des erfassten Kamerabildes 600 zum transformierten Bild 700 transformiert werden. Alternativ oder zusätzlich kann das transformierte Bild 700 eine Skalierung gegenüber dem erfassten Kamerabildes 600 aufweisen, insbesondere weist das transformierte Bild 700 eine niedrigere Anzahl von Bildpunkten (Pixeln) im Vergleich zu dem erfassten Kamerabild 600 auf. Das Steuergerät 400 erfasst optional oder alternativ mittels der Ultraschallsensoren 210 Abstände zwischen dem Fahrzeug 100 und Objekten 220, 230 in der Umgebung 200 des Fahrzeugs 100, wobei das Steuergerät 400 in Abhängigkeit der erfassten Abstände eine Tiefenkarte der Umgebung 200 des Fahrzeugs 100 ermittelt. Des Weiteren kann das Steuergerät 400 Kontouren von Objekten in der Umgebung 200 des Fahrzeugs 100 in Abhängigkeit der erfassten Tiefenkarte ermitteln. Das Steuergerät 400 erfasst des Weiteren eine Satellitenposition des Fahrzeugs 100 mittels der Sensoreinheit 140 durch eine satellitengestützte Positionsbestimmung, welche mittels der Recheneinheit 401 durchgeführt wird. In dem elektronischen Speicher 402 des Steuergeräts 400 sind Satellitenbilder 800 beziehungsweise Luftbilder 800 gespeichert. Das Steuergerät 400 stellt in Abhängigkeit der erfassten Satellitenposition mittels des elektronischen Speichers ein Luftbild 800 der Umgebung 200 der Fahrzeugs 100 bereit, wobei das bereitgestellte Satellitenbild 800 beziehungsweise Luftbild 800 eine größere Umgebung 200 des Fahrzeugs 100 als die erfassten Kamerabilder 600 umfasst. Anschließend erkennt das Steuergerät 400 mittels der Recheneinheit 401 die Lage des transformierten Bildes 700 in dem bereitgestellten Luftbild 800. Die Erkennung der Lage des transformierten Bildes 700 in dem bereitgestellten Luftbild 800 kann in Abhängigkeit von ermittelten Merkmalen der Bildpixel beziehungsweise von der die Umgebung repräsentierenden Umgebungsgröße eines Pixels, ermittelten Segmenten und/oder ermittelten Objekten und/oder ermittelten Kontouren erfolgen. Die Recheneinheit 401 ermittelt eine Fahrzeugposition 1000 und/oder die Ausrichtung des Fahrzeugs 100 in Abhängigkeit der erkannten Lage des transformierten Bildes 700 in dem bereitgestellten Luftbild 800.

Das Steuergerät 400 kann des Weiteren ein Ausgangssignal an einer Ausgangsschnittstelle erzeugen, wobei das Ausgangssignal dazu eingerichtet ist, eine Anzeigevorrichtung 440 zur Anzeige der Fahrzeugposition und/oder der Ausrichtung des Fahrzeugs 100 anzusteuern. Das Ausgangssignal kann alternativ oder zusätzlich dazu eingerichtet sein, die Fahrzeugposition und/oder die Ausrichtung einem Fahrzeugsteuerung-Steuergerät 450 zur beispielsweise automatischen Steuerung des Fahrzeugs 100 bereitzustellen.

In einer alternativen oder zusätzlichen Weiterführung kann das Ausgangssignal eine Information zur erfolgreichen Bestimmung der Fahrzeugposition 1000 in Abhängigkeit der erkannten Lage des transformierten Bildes 700 in dem bereitgestellten Luftbild 800 repräsentieren. In dieser Weiterführung ist das Ausgangssignal beispielsweise bei einer nicht erfolgreichen Bestimmung der Fahrzeugposition 1000 dazu eingerichtet, eine Fahrassistenzfunktion des Fahrzeugs 100 zu beenden oder ein Warnsignal an den Fahrer zu erzeugen.

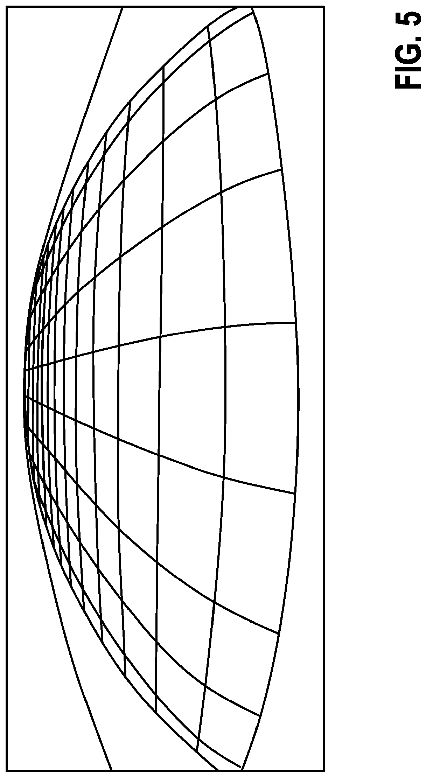

In Figur 5 ist ein Kamerabild 600 aus einer Perspektive 120 einer an dem Fahrzeug 100 in Fahrtrichtung nach hinten angeordneten Kamera 110 dargestellt. Die Kamera 110 erfasst ein schachbrettartiges Testmuster als Kamerabild 600. Anschließend erfolgt eine Erzeugung des transformierten Bildes 700 aus einer virtuellen Perspektive 121 in Abhängigkeit des Kamerabildes 600. Da ein erwartetes Referenzbild des schachbrettartigen Testmusters aus der Perspektive 121 aus einem Speicher des Steuergerätes geladen werden kann, das heißt das transformierte Bild 700 als Referenzbild bereits bekannt ist, kann die Transformationsmatrix in Abhängigkeit des erfassten Kamerabildes 600 und des Referenzbildes ermittelt werden. Die Ermittlung der Transformationsmatrix kann nach der Montage des Fahrzeugs 100 oder als Kalibrierung während des Produktlebenszyklus durch eine Reparaturwerkstatt oder einen Fachhändler durchgeführt werden. Durch die separate Ermittlung der Transformationsmatrix für jede Kamera beziehungsweise jedes Fahrzeug 100 wird eine hohe Genauigkeit der ermittelten Fahrzeugposition trotz gegebenenfalls vorliegenden Fertigungstoleranzen erzielt. Durch die Ermittlung der Transformationsmatrix ist das später im Betrieb erzeugte transformierte Bild genauer.

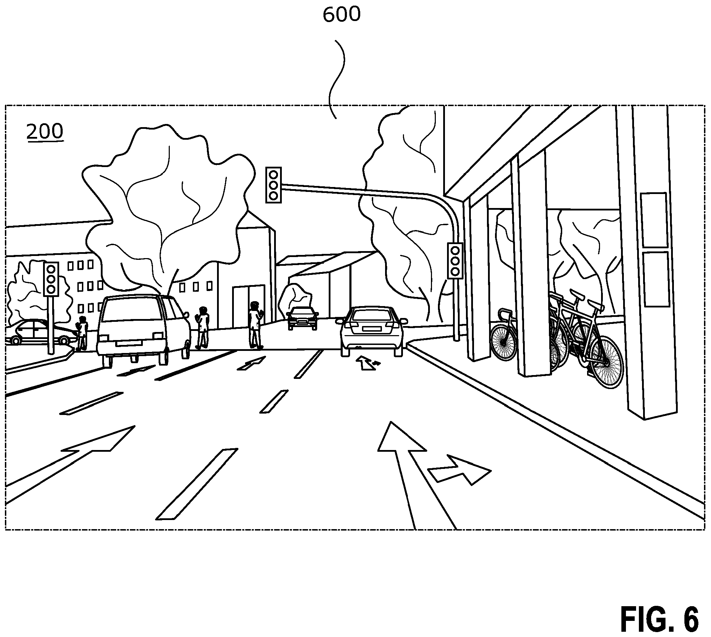

In Figur 6 ist ein Kamerabild 600 aus einer Perspektive 120 einer nach vorne gerichteten Kamera 110 des Fahrzeugs 100 dargestellt. Die Kamera 110 erfasst eine Straßenkreuzung in einer Stadt, wobei die Perspektive 120 ähnlich zu einer Fahrerperspektive ist.

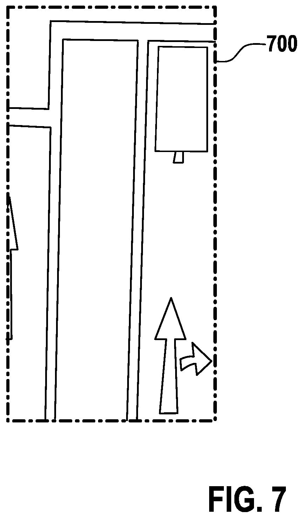

In Figur 7 ist beispielhaft ein erzeugtes transformiertes Bild 700 dargestellt, welches mittels der rechnerischen Transformation 113 in Abhängigkeit des Kamerabildes 600 aus Figur 6 erzeugt ist. Dabei ist das transformierte Bild 700 lediglich in Abhängigkeit eines Teilbereichs des Kamerabildes 600 ermittelt beziehungsweise erzeugt. In dem Kamerabild 600 aus Figur 6 und/oder dem transformierten Bild 700 aus Figur 7 können Straßenbahnmarkierungen, beispielsweise Richtungspfeile, und/oder Ampelanlagen, Bäume und/oder Gebäude als Objekte und/oder Segmente, beispielsweise Bürgersteige, rechnerisch erkannt werden.

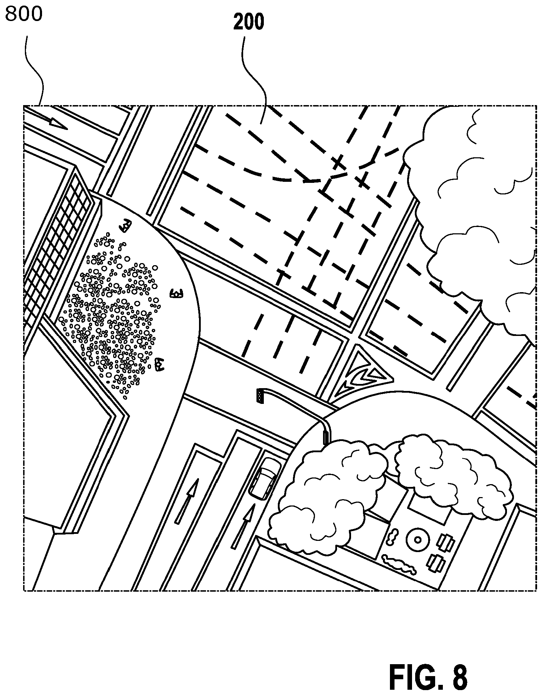

In Figur 8 ist ein Luftbild 800 beziehungsweise eine Satellitenaufnahme einer Umgebung 200 des Fahrzeugs 100 dargestellt. Das Luftbild 800 wird aus einem elektronischen Speicher 402 des Steuergeräts 400 in Abhängigkeit einer bestimmten Satellitenposition des Fahrzeugs 100 bereitgestellt, beispielsweise in Abhängigkeit einer durch das GPS-Verfahren bestimmten Satellitenposition, wobei die Genauigkeit einer Satellitenposition typischerweise zwischen 1 bis 10 Meter liegt.

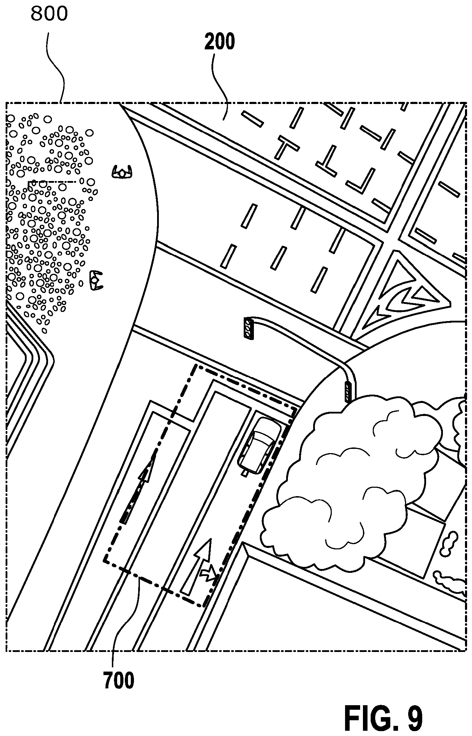

In Figur 9 ist eine erkannte Lage des transformierten Bildes 700 aus Figur 7 in dem Luftbild 800 aus Figur 8 dargestellt. Die Lage wird beispielsweise in Abhängigkeit der Straßenbahnmarkierungen erkannt, wobei die Straßenbahnmarkierungen in dem Kamerabild als erste Objekte beziehungsweise erste Segmente ermittelt und/oder dem transformierten Bild 700 und dem Luftbild 800 als zweite Objekte beziehungsweise zweite Segmente ermittelt werden.

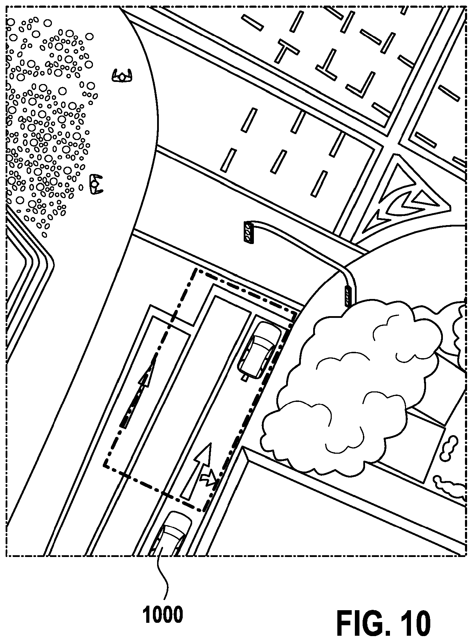

Des Weiteren ist die Lage zwischen dem transformierten Bild 700 und der Position 1000 des Fahrzeugs 100 bekannt. Ferner sind den Pixeln des Luftbildes 800 Ortskoordinaten zugeordnet. Demnach kann in Abhängigkeit der erkannten Lage des transformierten Bildes 700 in dem Luftbild 800 die Fahrzeugposition 1000 ermittelt werden. In Figur 10 ist eine ermittelte Fahrzeugposition 1000 dargestellt, wobei die Fahrzeugposition 1000 in Abhängigkeit der erkannten Lage des transformierten Bildes 700 in dem Luftbild 800 ermittelt ist. Der Fehler der durch das erfindungsgemäße Verfahren ermittelten Fahrzeugposition 1000 beziehungsweise der Fahrzeugkoordinaten ist kleiner 1 Meter, insbesondere kleiner 10 Zentimeter. Das erfindungsgemäße Verfahren ermittelt eine Fahrzeugposition 1000 damit genauer als eine satellitengestützte Positionsbestimmung.

## Patentansprüche

1. Verfahren zur Positionsbestimmung eines Fahrzeugs (100), wobei an dem Fahrzeug (100) mindestens eine Kamera (110) und eine Sensoreinheit (140) für ein globales Satellitennavigationssystem angeordnet sind, aufweisend die folgenden Verfahrensschritte
• Erfassung (310) wenigstens eines Kamerabildes (600) einer Umgebung (200) des Fahrzeugs (100) mittels der Kamera (110),
• Erzeugung (320) eines transformierten Bildes (700) in Abhängigkeit zumindest eines Ausschnittes des erfassten Kamerabildes (600) und einer Transformationsmatrix, das heißt einer Zuordnung zwischen den Pixeln des transformierten Bildes zu den Pixeln des erfassten Kamerabildes, wobei das transformierte Bild (700) einen gegenüber dem erfassten Kamerabild (600) veränderten Beobachterstandpunkt oberhalb des Fahrzeugs (100) mit einer nach unten gerichteten virtuellen Perspektive (121) auf die Umgebung (200) des Fahrzeugs (100) aufweist,
• Bestimmung (330) einer Satellitenposition des Fahrzeugs (100) durch eine satellitengestützte Positionsbestimmung,
• Bereitstellung (340) eines Luftbildes (800) der Umgebung (200) des Fahrzeugs (100) in Abhängigkeit der bestimmten Satellitenposition,
• Ermittlung (380) von ersten Objekten in dem transformierten Bild (700) und von zweiten Objekten in dem bereitgestellten Luftbild (800) durch jeweils eine Objekterkennung, wobei die ermittelten Objekte feststehend sind, und
• Erkennung (394) einer Lage des transformierten Bildes (700) in dem bereitgestellten Luftbild (800) in Abhängigkeit einer Zuordnung des mindestens einen ersten Objektes zu einem zweiten Objekt., und
• Ermittlung (395) einer Fahrzeugposition in Abhängigkeit der erkannten Lage des transformierten Bildes (700) in dem bereitgestellten Luftbild (800),
**dadurch gekennzeichnet, dass**
die Erzeugung (320) des transformierten Bildes (700) zusätzlich in Abhängigkeit eines digitalen Geländemodells der Umgebung (200) des Fahrzeugs (100) erfolgt, wobei in dem transformierten Bild lediglich nahezu horizontale Bereiche der Umgebung abgebildet sind und wobei das Geländemodell in Abhängigkeit der bestimmten Satellitenposition geladen wird.

2. Verfahren nach Anspruch 1, **dadurch gekennzeichnet, dass** der folgende Schritt durchgeführt wird
• Anpassung (350) des transformierten Bildes (700) und/oder des Luftbildes (800), wobei die Anpassung insbesondere durch eine Umwandung des transformierten Bildes (700) und des Luftbildes (800) in ein Graustufenbild und/oder eine Anpassung einer Helligkeit des Luftbildes (800) an das transformierte Bild (700) erfolgt, wobei der Einfluss unterschiedlicher Tageszeiten oder Lichtverhältnisse reduziert wird.

3. Verfahren nach einem der vorhergehenden Ansprüche, **dadurch gekennzeichnet, dass** die folgenden Schritte durchgeführt werden
• Ermittlung (360) von Merkmalen in dem transformierten Bild (700) und dem bereitgestellten Luftbild (800), wobei jedem Pixel des transformierten Bildes (700) und des bereitgestellten Luftbildes (800) ein Merkmal zugeordnet wird, welches die jeweilige Umgebung des Pixels beschreibt, und
• Erkennung (394) der Lage des transformierten Bildes (700) in dem Luftbild (800) in Abhängigkeit einer Zuordnung von mindestens zwei in dem transformierten Bild (700) ermittelten Merkmalen zu in dem Luftbild (800) ermittelten Merkmalen.

4. Verfahren nach einem der vorhergehenden Ansprüche, **dadurch gekennzeichnet, dass** die folgenden Schritte durchgeführt werden
• Ermittlung (370) von ersten Segmenten in dem transformierten Bild (700) und von zweiten Segmenten in dem bereitgestellten Luftbild (800) durch jeweils ein Segmentierungsverfahren, und
• Erkennung (394) der Lage des transformierten Bildes (700) in dem Luftbild (800) in Abhängigkeit einer Zuordnung des mindestens einen ersten Segments zu einem zweiten Segment.

5. Verfahren nach einem der vorhergehenden Ansprüche, **dadurch gekennzeichnet, dass** die folgenden Schritte durchgeführt werden
• Erfassung (390) einer Tiefenkarte der Umgebung (200) des Fahrzeugs (100) mittels Abstandssensoren (210), wobei die Abstandssensoren (210) dazu eingerichtet sind, einen Abstand zwischen dem Fahrzeug (100) und Objekten (220, 230) in der Umgebung (200) zu erfassen,
• Ermittlung (391) von Konturen und/oder Objekten (220, 230) in der Umgebung des Fahrzeugs in Abhängigkeit der erfassten Tiefenkarte, und
• Erkennung (394) der Lage des transformierten Bildes (700) in dem Luftbild (800) zusätzlich in Abhängigkeit einer Zuordnung der ermittelten Konturen in der Tiefenkarte und/oder eines in der Tiefenkarte ermittelten Objektes (220, 230) zu mindestens einem zweiten Objekt und/oder einem zweiten Segment in dem Luftbild (800).

6. Steuergerät (400) zur Positionsbestimmung eines Fahrzeugs (100), wobei am Fahrzeug (100) mindestens eine Kamera (110) und eine Sensoreinheit (140) für ein globales Satellitennavigationssystem angeordnet sind, wobei das Steuergerät (400) dazu eingerichtet ist, ein Verfahren nach einem der Ansprüche 1 bis 5 durchzuführen.

7. Steuergerät nach Anspruch 6, **dadurch gekennzeichnet, dass** die Kamera eine Infrarot-Kamera ist.

8. Steuergerät nach einem der Ansprüche 6 oder 7, **dadurch gekennzeichnet, dass** das Steuergerät
• ein Ausgangssignal erzeugt, wobei das Ausgangssignal dazu eingerichtet ist, die ermittelte Fahrzeugposition anzuzeigen und/oder die ermittelte Fahrzeugposition einer Fahrzeugsteuerung bereitzustellen.

9. Fahrzeug mit einem Steuergerät nach einem der Ansprüche 6 bis 8.

## Claims

1. Method for determining the position of a vehicle (100), wherein at least one camera (110) and a sensor unit (140) for a global satellite navigation system are arranged on the vehicle (100), comprising the following method steps:
• capturing (310) at least one camera image (600) of an environment (200) of the vehicle (100) by way of the camera (110),
• generating (320) a transformed image (700) on the basis of at least one section of the captured camera image (600) and a transformation matrix, that is to say an assignment between the pixels of the transformed image and the pixels of the captured camera image, wherein the transformed image (700) has an observer position, changed in relation to the captured camera image (600), above the vehicle (100) with a downwardly directed virtual perspective (121) onto the environment (200) of the vehicle (100),
• determining (330) a satellite position of the vehicle (100) by way of satellite-aided position determination,
• providing (340) an aerial image (800) of the environment (200) of the vehicle (100) on the basis of the determined satellite position,
• identifying (380) first objects in the transformed image (700) and second objects in the provided aerial image (800) through object recognition in each case, wherein the identified objects are stationary, and
• recognizing (394) a position of the transformed image (700) in the provided aerial image (800) on the basis of an assignment of the at least one first object to a second object, and
• identifying (395) a vehicle position on the basis of the recognized position of the transformed image (700) in the provided aerial image (800),
**characterized in that**
the transformed image (700) is generated (320) additionally on the basis of a digital terrain model of the environment (200) of the vehicle (100), wherein the transformed image depicts only almost horizontal areas of the environment and wherein the terrain model is loaded depending on the determined satellite position.

2. Method according to Claim 1, **characterized in that** the following step is performed:
• adapting (350) the transformed image (700) and/or the aerial image (800), wherein the adaptation is carried out in particular by converting the transformed image (700) and the aerial image (800) into a grayscale image and/or adapting a brightness of the aerial image (800) to the transformed image (700), wherein the influence of different times of day or lighting conditions is reduced.

3. Method according to either of the preceding claims, **characterized in that** the following steps are performed:
• identifying (360) features in the transformed image (700) and the provided aerial image (800), wherein each pixel of the transformed image (700) and the provided aerial image (800) is assigned a feature that describes the respective environment of the pixel, and
• recognizing (394) the position of the transformed image (700) in the aerial image (800) on the basis of an assignment of at least two features identified in the transformed image (700) to features identified in the aerial image (800).

4. Method according to one of the preceding claims, **characterized in that** the following steps are performed:
• identifying (370) first segments in the transformed image (700) and second segments in the provided aerial image (800) through a segmentation method in each case, and
• recognizing (394) the position of the transformed image (700) in the aerial image (800) on the basis of an assignment of the at least one first segment to a second segment.

5. Method according to one of the preceding claims, **characterized in that** the following steps are performed:
• recording (390) a depth map of the environment (200) of the vehicle (100) by way of distance sensors (210), wherein the distance sensors (210) are configured to detect a distance between the vehicle (100) and objects (220, 230) in the environment (200),
• identifying (391) contours and/or objects (220, 230) in the environment of the vehicle on the basis of the recorded depth map, and
• recognizing (394) the position of the transformed image (700) in the aerial image (800) additionally on the basis of an assignment of the identified contours in the depth map and/or an object (220, 230) identified in the depth map to at least one second object and/or second segment in the aerial image (800).

6. Control unit (400) for determining the position of a vehicle (100), wherein at least one camera (110) and a sensor unit (140) for a global satellite navigation system are arranged on the vehicle (100), wherein the control unit (400) is configured to perform a method according to one of Claims 1 to 5.

7. Control unit according to Claim 6, **characterized in that** the camera is an infrared camera.

8. Control unit according to either of Claims 6 and 7, **characterized in that** the control unit
• generates an output signal, wherein the output signal is configured to indicate the identified vehicle position and/or to provide the identified vehicle position to a vehicle controller.

9. Vehicle having a control unit according to one of Claims 6 to 8.

## Revendications

1. Procédé de détermination de la position d'un véhicule (100), au moins une caméra (110) et une unité (140) formant capteur pour un système mondial de navigation par satellite étant agencées sur le véhicule (100), présentant les étapes de procédé suivantes
• acquisition (310) d'au moins une image de caméra (600) d'un environnement (200) du véhicule (100) au moyen de la caméra (110),
• génération (320) d'une image transformée (700) en fonction d'au moins une partie de l'image de caméra (600) capturée et d'une matrice de transformation, c'est-à-dire d'une association entre les pixels de l'image transformée et les pixels de l'image de caméra capturée, l'image transformée (700) présentant un point de vue d'observateur modifié par rapport à l'image de caméra (600) capturée au-dessus du véhicule (100) avec une perspective virtuelle (121) orientée vers le bas sur l'environnement (200) du véhicule (100),
• détermination (330) d'une position satellite du véhicule (100) par une détermination de position assistée par satellite,
• fourniture (340) d'une image aérienne (800) de l'environnement (200) du véhicule (100) en fonction de la position satellite déterminée,
• détermination (380) de premiers objets dans l'image transformée (700) et de deuxièmes objets dans l'image aérienne (800) mise à disposition par une reconnaissance d'objet respective, les objets déterminés étant stationnaires, et
• reconnaissance (394) d'une position de l'image transformée (700) dans l'image aérienne (800) fournie en fonction d'une association d'au moins un premier objet avec un deuxième objet, et
• détermination (395) d'une position du véhicule en fonction de la position reconnue de l'image transformée (700) dans l'image aérienne (800) fournie,
**caractérisé en ce que**
la génération (320) de l'image transformée (700) s'effectue en outre en fonction d'un modèle numérique de terrain de l'environnement (200) du véhicule (100), seules des zones presque horizontales de l'environnement étant représentées dans l'image transformée, et le modèle de terrain étant chargé en fonction de la position satellite déterminée.

2. Procédé selon la revendication 1, **caractérisé en ce que** l'étape suivante est mise en oeuvre
• adaptation (350) de l'image transformée (700) et/ou de l'image aérienne (800), l'adaptation étant notamment réalisée en convertissant l'image transformée (700) et de l'image aérienne (800) en une image en niveaux de gris et/ou adaptation d'une luminosité de l'image aérienne (800) à l'image transformée (700), grâce à quoi l'influence des différents moments de la journée ou des différentes conditions de luminosité est réduite.

3. Procédé selon l'une des revendications précédentes, **caractérisé en ce que** les étapes suivantes sont effectuées
• détermination (360) de caractéristiques dans l'image transformée (700) et dans l'image aérienne (800) fournie, une caractéristique décrivant l'environnement respectif du pixel étant associée à chaque pixel de l'image transformée (700) et de l'image aérienne (800) fournie, et
• reconnaissance (394) de la position de l'image transformée (700) dans l'image aérienne (800) en fonction d'une association d'au moins deux caractéristiques déterminées dans l'image transformée (700) avec des caractéristiques déterminées dans l'image aérienne (800).

4. Procédé selon l'une des revendications précédentes, **caractérisé en ce que** l'on effectue les étapes suivantes
• détermination (370) de premiers segments dans l'image transformée (700) et de deuxièmes segments dans l'image aérienne (800) fournie, par un procédé de segmentation respectif, et
• détection (394) de la position de l'image transformée (700) dans l'image aérienne (800) en fonction d'une association dudit au moins un premier segment avec un deuxième segment.

5. Procédé selon l'une des revendications précédentes, **caractérisé en ce que** l'on met en oeuvre les étapes suivantes
• acquisition (390) d'une carte de profondeur de l'environnement (200) du véhicule (100) au moyen de capteurs de distance (210), les capteurs de distance (210) étant agencés pour détecter une distance entre le véhicule (100) et des objets (220, 230) de l'environnement (200),
• détermination (391) de contours et/ou d'objets (220, 230) dans l'environnement du véhicule en fonction de la carte de profondeur détectée, et
• détection (394) de la position de l'image transformée (700) dans l'image aérienne (800) en outre en fonction d'une association des contours déterminés dans la carte de profondeur et/ou d'un objet (220, 230) déterminé dans la carte de profondeur avec au moins un deuxième objet et/ou un deuxième segment dans l'image aérienne (800).

6. Appareil de commande (400) pour déterminer la position d'un véhicule (100), dans lequel au moins une caméra (110) et une unité (140) formant capteur pour un système mondial de navigation par satellite sont agencées sur le véhicule (100), l'appareil de commande (400) étant adapté pour mettre en oeuvre un procédé selon l'une des revendications 1 à 5.

7. Appareil de commande selon la revendication 6, **caractérisé en ce que** la caméra est une caméra infrarouge.

8. Appareil de commande selon l'une des revendications 6 ou 7, **caractérisé en ce que** l'appareil de commande
• génère un signal de sortie, le signal de sortie étant adapté pour afficher la position déterminée du véhicule et/ou pour fournir la position déterminée du véhicule à une commande du véhicule.

9. Véhicule automobile, comprenant un contrôleur selon l'une des revendications 6 à 8.
